# EUROPEAN PATENT APPLICATION

(11) **EP 1 944 965 A1**
(43) Date of publication of application: **16.07.2008**
(21) Application number: 06843055.2
(22) Date of filing: 22.12.2006
(51) Int. Cl.: H04N 5/225, G02B 7/08, G03B 17/02

(54) **IMAGING DEVICE**

(30) Priority: 26.12.2005 JP 2005372490
(71) Applicant: MATSUSHITA ELECTRIC INDUSTRIAL CO., LTD., Osaka 571-8501 (JP)
(72) Inventor: MURAKAMI, Tomohiro c/o Matsushita Electr.Ind., Chuo-ku,Osaka-shi,Osaka 540-6207 (JP)
(74) Representative: Eisenführ, Speiser & Partner
(86) International application number: PCT/JP2006/325596
(87) International publication number: WO 2007/077759

(57) **Abstract**

In the present imaging device, a cassette cover 2 is extended not only to a grip surface of a camcorder 1 but also to a side surface on a viewfinder side. Thus, a variety of switches to be mounted on the surface on the viewfinder side can be mounted on the cassette cover 2, thereby a zoom switch 4 and an S/S button 8 can be connected to a circuit board 31 with a single flexible board 32 and a single connector 33. Therefore, the wirings can be simplified.

## Description

### Technical Field

The present invention relates to an imaging device capable of taking an optical image.

### Background Art

In recent years, the miniaturization and the performance enhancement of a camcorder as a type of imaging device have advanced, and a variety of operation devices have been mounted thereon. Therefore, a recording button, switches and the like are placed so that a user grips the camcorder with his/her hand and can operate the button and switches comfortably with his/her fingers of the same hand. However, due to such a configuration, the wirings of the operation devices have become complicated.

Hereinafter, a conventional imaging device will be described.

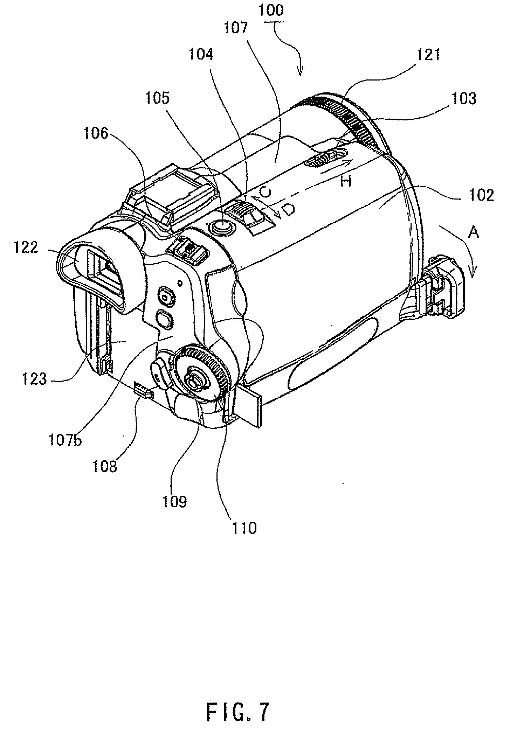

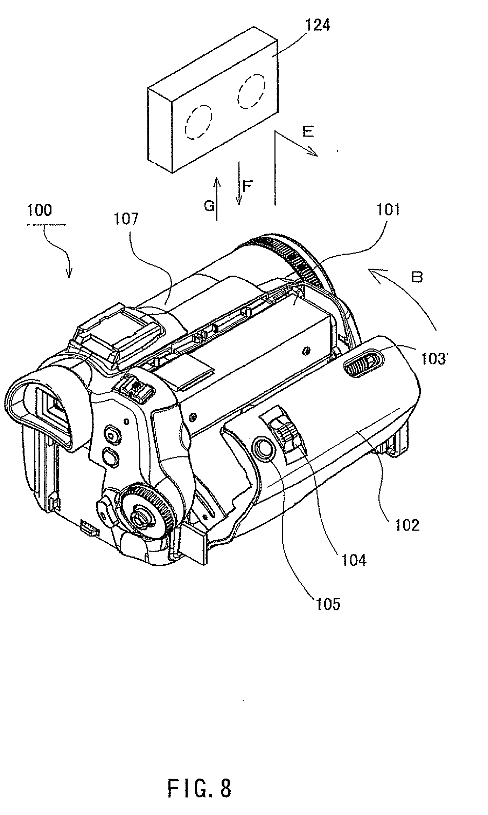

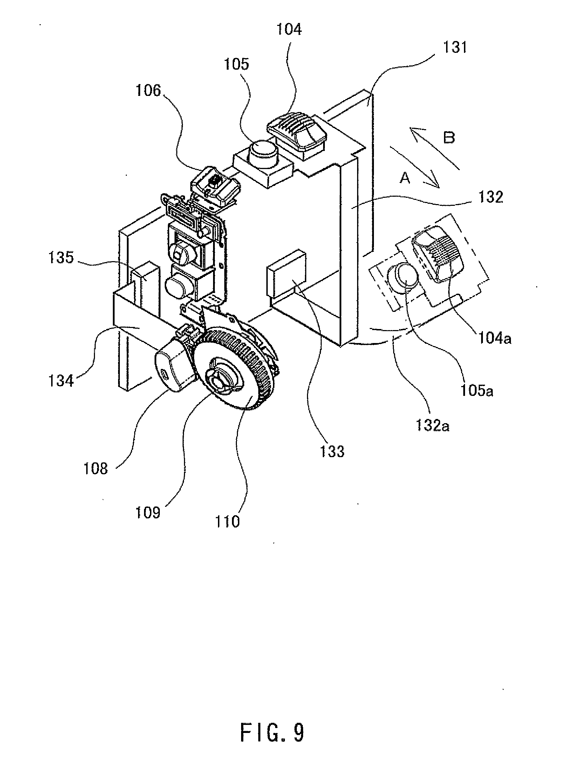

FIG. 7 is a perspective view showing a camcorder in which a conventional imaging device is placed, which is observed from the grip portion side. FIG. 8 is a perspective view showing a state where a cassette cover is opened to insert or take out a cassette tape into/from the camcorder shown in FIG. 7. FIG. 9 is a perspective view showing a schematic configuration of wirings of operation switches when the cassette cover is closed (shown in a full line) and opened (shown in a dotted line) as shown respectively in FIGS. 7 and 8.

In FIGS. 7 and 8, a camcorder 100 includes elements such as an imaging portion including lenses, an imaging element, and the like; a signal processing circuit for generating a video signal on the basis of an optical image taken by the imaging portion; and a mechanism capable of mounting/demounting an information medium such as a cassette tape. The outer enclosure of the camcorder 100 is formed mainly of a case 107 and a cassette cover 102. As will be described below, the cassette cover 102 is supported by a turning spindle (not shown) so that it can be opened and closed with respect to the case 107. In the case 107, a barrel 121 containing lenses and an imaging element, a viewfinder 122 with which a shot video or the like can be recognized visually, a mounting portion 123 on which a liquid crystal display (not shown), a battery (not shown), and the like are mounted are placed, for example.

The cassette cover 102 forms the outer enclosure of the grip portion of the camcorder 100, and it is supported by the turning spindle so that it can be opened/closed in directions indicated respectively by an arrow Ain FIG. 7 and an arrow B in FIG. 8. By driving magnetic tape of a tape cassette 124 mounted in the camcorder 100 in a state where the cassette cover 102 is closed as shown in FIG. 7, captured video and audio can be recorded onto or reproduced from the magnetic tape. The tape cassette 124 can be inserted into or taken out from the camcorder in a state where the cassette cover 102 is opened as shown in FIG. 8. A lock lever 103, a zoom switch 104, and a still image shooting button 105 are placed on the top surface of the cassette cover 102.

By sliding the lock lever 103 in a state where the cassette cover 102 is closed as shown in FIG. 7, the cassette cover 102 is unlocked, and thus the cassette cover 102 can be opened in the arrow A direction. Further, by turning the cassette cover 102 in the arrow B direction to make it reach a position shown in FIG. 7 in a state where the cassette cover 102 is opened as shown in FIG. 8, a lock hook (not shown) provided integrally to the lock lever 103 fits into a lock hole formed on the case of the camcorder 100, thereby holding the cassette cover 102 in a closed state.

The zoom switch 104 is formed of a switch slidable in an arrow C or D direction in FIG. 7. By sliding the switch, a zoom lens contained in the camcorder 100 is driven, and thus an optical image can be zoomed in (telephoto) or out (wide-angle).

The still image shooting button 105 is formed of a push button. By pressing the button, an electronic shutter function of the imaging element is activated, thereby a still image can be taken.

A power switch 106 is formed of a slide switch, and is placed on the case 107. By operating the power switch 106, the power of the camcorder 100 can be turned on/off.

A start/stop button (hereinafter referred to as an S/S button) 108 is formed of a push button, and is placed on the case 107. By operating the S/S button 108, video shooting can be started/stopped. A mode selection lever 109 is formed of a stick-shaped lever, and is placed on the case 107. By operating the mode selection lever 109, a variety of functions of the camcorder 100 can be selected.

A mode dial 110 is formed of a dial switch rotatable in the circumferential direction, and is placed on the case 107 about the substantially same axis as the mode selection lever 109. By operating the mode dial 110, modes of the camcorder 100 can be switched. The modes that can be switched in this configuration include a shooting mode in which a video and a still image can be taken, a playback mode in which a video signal or an audio signal recorded on the tape cassette 124 or other information media can be reproduced, a communication mode in which image data can be sent to or received from an electronic computing device such as a personal computer by connecting the camcorder thereto through a communication cable, and the like.

The case 107 includes a main body switch placement portion 107b on which the power switch 106, the S/S button 108, the mode selection lever 109, and the mode dial 110 are placed.

In FIG. 9, a circuit board 131 is fixed within the case 107 in FIG. 7, and connectors 133 and 135, and a variety of electronic components are mounted thereon. The circuit board 131 is placed to substantially parallel to the optical axis of a lens contained in the barrel 103, and substantially vertical to the bottom surface of the camcorder 100.

One end of a flexible board 132a that is made of a flexible material and that contains electric wires is connected to the connector 133, thereby the flexible board 132 and the circuit board 131 are connected electrically to each other.

The zoom switch 104 and the still image shooting button 105 are mounted on and connected electrically to the other end of the flexible board 132. The other end of the flexible board 132 and the components (zoom switch 104, etc.) mounted on the other end of the flexible board 132 are fixed to the cassette cover 102, and they will be displaced in connection with the opening/closing movement of the cassette cover 102.

One end of a flexible board 134 is connected to the connector 135, and thereby the flexible board 134 and the circuit board 131 are connected electrically to each other.

The power switch 106, the S/S button 108, the mode selection lever 109, and the mode dial 10 are connected electrically to the other end of the flexible board 134. Though not shown, the other end of the flexible board 134 and the components (power switch 106, etc.) that are connected electrically to the flexible board 134 are fixed to the inner surface of the case 107. The zoom switch 104 and the still image shooting button 105 are connected electrically to the board 131 that controls an electric signal with the flexible board 132a through the connector 133.

The power switch 100, the S/S button 108, the mode selection lever 109, and the mode selection dial 110 are all connected to the flexible board 134, and similarly to the case of the flexible board 132, they are connected electrically to the circuit board 131 through the connector 135.

Hereinafter, an operation will be described.

By sliding the lock lever 103 in an arrow H direction in a state where the cassette cover 102 is closed with respect to the case 107 as shown in FIG. 7, the cassette cover 102 is unlocked, and thus the cassette cover 102 can be opened/closed in the arrow A direction.

By turning the cassette cover 102 in the arrow A direction to open as shown in FIG. 8, an internal open/close detection switch (not shown) detects that the cassette cover 102 is opened, and a motor (not shown) is actuated to elevate a cassette holder 101 in an arrow E direction and to open a lid of the cassette holder 101. As indicated respectively by the arrows F and G, the tape cassette 124 can be inserted into or taken out from the cassette holder 101 whose lid is opened.

Since the zoom switch 104 and the still image shooting button 105 are placed on the cassette cover 102, they move to positions denoted by reference numerals 104a and 105b in FIG. 9 when the cassette cover 102 is opened as shown in FIG. 8. The flexible board 132 deforms itself in accordance with the opening/closing movement of the cassette cover 102 as indicated by a reference numeral 132a in FIG. 9. Therefore, the zoom switch 104 and the still image shooting button 105 are connected electrically to the circuit board 131 through the flexible board 132 even when the cassette cover 102 is opened or closed. The positions of the components such as the power switch 106 placed on the case 107 side do not change even when the cassette cover 102 is opened or closed.

Configurations similar to the above are disclosed in FIGS. 6 and 7 of Patent Document 1.
Patent Document 1: JP 2005-203054 A

### Disclosure of Invention

### Problems to be solved by the Invention

In the above conventional configuration, however, since the flexible board 132 connecting the switches mounted on the cassette cover 102 and the circuit board 131, and the flexible board 134 connecting the switches mounted on the case 107 side and the circuit board 131, are placed independently, the number of components is increased, thereby resulting in an increase in cost.

Furthermore, since the two connectors 133 and 135 are required to connect each of the flexible boards 132 and 134 and the circuit board, the number of components is increased, thereby resulting in an increase in cost.

Therefore, with the forgoing in mind, it is an object of the present invention to provide an imaging device whose internal electric wirings are reduced in cost.

### Means for Solving Problem

In order to achieve the above object, the imaging device of the present invention includes: a first case that includes an imaging portion including an imaging element, a lens portion including a plurality of lenses for forming an optical image on the imaging element, a signal converting portion for converting an optical image signal formed on the imaging element into an electric signal, and a lens driving portion for driving the plurality of lenses to change the focal length of the lens portion; and a second case that includes a focal length operation portion for driving the lens driving portion, an imaging start/stop operation portion for starting and stopping recording of the electric signal, and a power supply operation portion for supplying and stopping supply power to the imaging element and the lens driving portion. The first case and the second case are configured so that they can be opened/closed.

### Effects of the Invention

According to the present invention, the number of components can be reduced, and thus the cost can be reduced.

### Brief Description of Drawings

[FIG. 1] FIG. 1 is a perspective view showing the exterior of an imaging device according to an embodiment of the present invention.
[FIG. 2] FIG. 2 is a perspective view showing the exterior of the imaging device according to the embodiment.
[FIG. 3] FIG. 3 is a perspective view showing the internal configuration of the imaging device according to the embodiment.
[FIG. 4] FIG. 4 is a side view showing the imaging device according to the embodiment.
[FIG. 5] FIG. 5 is a plan view showing the imaging device according to the embodiment.
[FIG. 6] FIG. 6 is a perspective view showing another configuration of the imaging device according to the embodiment.
[FIG. 7] FIG. 7 is a perspective view showing the exterior of a conventional imaging device.
[FIG. 8] FIG. 8 is a perspective view showing the exterior of the conventional imaging device.
[FIG. 9] FIG. 9 is a perspective view showing the internal configuration of the conventional imaging device.
[FIG. 10] FIG. 10 is a side view showing the conventional imaging device.
[FIG. 11] FIG. 11 is a plan view showing the conventional imaging device.

### Description of reference numerals

- 1: camcorder
- 2: cassette cover
- 4: zoom switch
- 5: still image shooting button
- 6: power switch
- 7: case
- 8: S/S button
- 9: mode selection lever
- 10: mode dial
- 3: circuit board
- 32: flexible board
- 33: connector

### Description of the Invention

The imaging device of the present invention may include in the first case a signal processor for converting an electric signal converted by the signal converting portion into a video signal, and a display portion for displaying a video on the basis of the video signal.

In the first case, the imaging portion, the signal converting portion, and the lens driving portion may be placed, and a first board having wirings for providing a control signal to those portions may be provided, and in the second case, a second board to which the focal length operation portion, the imaging start/stop operation portion, and the power supply operation portion are connected independently may be provided.

A single wiring board for connecting the second board and the first board may be provided.

A housing portion having a capacity for housing an information medium onto which the electric signal converted by the signal converting portion can be recorded may be provided at an interface portion at which the first case and the second case are opened/closed.

The second case may include a top surface portion that is substantially parallel to the optical axis of the lens portion and that covers the top of the device, and a side surface portion that is placed to be substantially parallel to a surface orthogonal to the optical axis of the lens portion and to be orthogonal to the top surface portion. The top surface portion and the side surface portion may be connected to each other through a curved portion formed in a curved shape, and at least one of the focal length operation portion, the imaging start/stop operation portion, and the power supply operation portion may be placed on the curved portion. With this configuration, the flexibility in placing the operation portions can be increased. Furthermore, since the flexibility in placing the operation portions can be increased, the imaging device can be miniaturized without compromising the usability of the operation portions.

The focal length operation portion, the imaging start/stop operation portion, and the power supply operation portion may be aligned on the second case, and adjacent operation portions may have a different operation direction from each other. With this configuration, an operating error of each of the operation portions can be prevented, and the usability can be improved.

### (Embodiment 1)

### [1. Configuration and operation of imaging device]

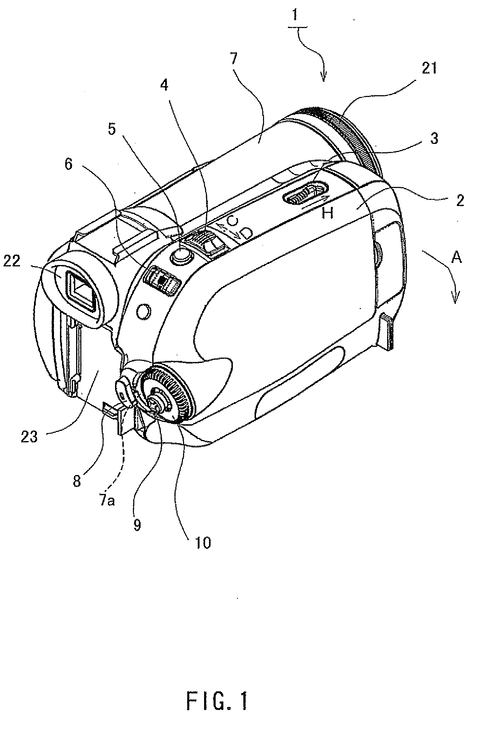

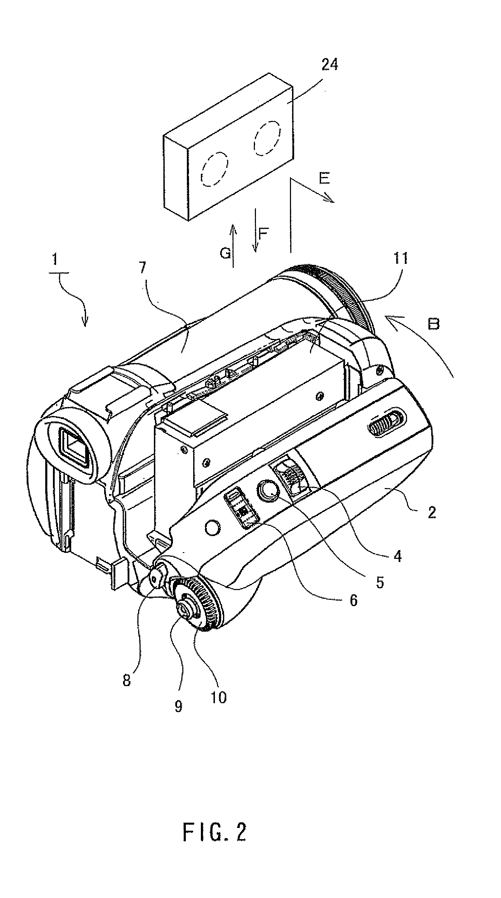

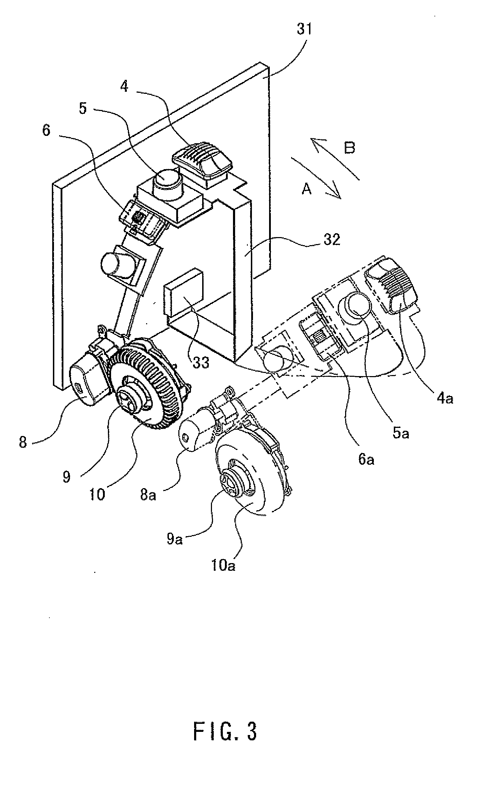

FIG. 1 is a perspective view showing the exterior of an imaging device according to Embodiment 1 of the present invention, in which the main body is observed from the grip side. FIG. 2 is a perspective view showing a state where a cassette cover is opened to insert or take out a cassette tape into/from the camcorder shown in FIG. 1. FIG. 3 is a perspective view showing the schematic configuration of wirings of operation switches in a state where the cassette cover is closed/opened as shown respectively in FIGS. 1 and 2. In FIG. 3, only necessary components are shown to facilitate description, and components unnecessary for the description are not shown.

As shown in FIGS. 1 and 2, a camcorder 1 (imaging device) includes: an imaging portion including lenses, an imaging element, and the like; a signal processing circuit (signal converting portion) for generating a video signal on the basis of an optical image taken by the imaging portion; and a mechanism capable of mounting/demounting an information medium such as a cassette tape or an optical disc, for example. The outer enclosure of the camcorder 1 is formed mainly of a case 7 (first case) and a cassette cover 2 (second case). As will be described below, the cassette cover 2 is supported turnably to the case 7, and also is supported so that it can be opened and closed. In the case 7, a barrel 21 containing lenses and an imaging element, a viewfinder 22 with which a captured video or the like can be recognized visually, a mounting portion 23 on which a liquid crystal display (not shown) and a battery (not shown) are mounted are placed, for example.

The cassette cover 2 forms the outer enclosure of the grip portion of the camcorder 1, and is supported by a support spindle (not shown) so that it can be opened and closed in directions indicated respectively by an arrow A in FIG. 1 and an arrow B in FIG. 2. By driving a magnetic tape of a tape cassette 24 mounted in the camcorder 1 in a state where the cassette cover 2 is closed as shown in FIG. 1, a captured video and audio can be recorded onto or reproduced from the magnetic tape. The tape cassette 24 can be inserted into or taken out from a cassette holder 11 as indicated by an arrow F or G when the cassette cover 2 is opened as shown in FIG. 2. A lock lever 3, a zoom switch 4, a still image shooting button 5 and a power switch 6 are placed on the top surface of the cassette cover 2, and an S/S button 8, a mode selection lever 9 and a mode dial 10 are placed on a side surface of the cassette cover 2. That is, the power switch 6 and the like that are placed on the case 7 in the above-described conventional configuration are placed on the cassette cover 2 in the present embodiment. Furthermore, as shown in FIG. 1, the cassette cover 2 covers not only the side surface of the camcorder 1 on the grip side but also the side surface with the viewfinder 22 facing the videographer in a manner that the cassette cover 2 can be opened and closed.

By sliding the lock lever 3 in a state where the cassette cover 2 is closed as shown in FIG. 1, the cassette cover 2 is unlocked, and thus the cassette cover 2 can be opened in the arrow A direction. By turning the cassette cover 2 in the arrow B direction to make it reach a position shown in FIG. 1 from a state where the cassette cover 2 is opened as shown in FIG. 2, a lock hook (not shown) provided integrally to the lock lever 3 fits into a lock hole formed on the case of the camcorder 1, thereby holding the cassette cover 2 in a closed state.

The zoom switch 4 (focal length operation portion) is a switch slidable in the arrow C or D direction in FIG. 1. The directions indicated by the arrows C and D are substantially similar to the directions in which a user's fingers are bent and stretched when the user grips the camcorder 1 with his/her right hand, thereby ensuring the usability By sliding the slide switch 4 in the arrow C or D direction, a zoom lens contained in the camcorder 1 is driven in its optical axis direction to adjust a focal position, thereby an optical image can be zoomed in (telephoto) and out (wide-angle). The zoom switch 4 is not limited to a slide switch, and the zoom function can be performed similarly even if it is formed of a seesaw switch or a push button switch.

The still image shooting button 5 is formed of a push button for example, and by pressing the button, an electronic shutter function of the imaging element is activated, and thus a still image can be taken.

The power switch 6 (power supply operation portion) is formed of a slide switch for example, and is placed on the top surface of the cassette cover 2. Similarly to the zoom switch 4, the sliding direction of the power switch 6 is the direction indicated by the arrow C or D. By operating the power switch 6, the power of the camcorder 1 can be turned on/off. The power switch 6 is not limited to a slide switch, and the power can be turned on/off similarly even if it is formed of a push button switch or a lever switch.

The zoom switch 4, the still image shooting button 5, and the power switch 6 are operation members.

The S/S button 8 (imaging start/stop operation portion) is a push button for example, and is placed on a side surface (videographer side) of the cassette cover 2. By operating the S/S button 8, a video shooting (recording operation) can be started/stopped. The side surface of the cassette cover 2 corresponds to a surface on which the eyepiece of the viewfinder 22 and a battery mounting portion 23 are placed. The S/S button 8 is not limited to a push button, and a shooting can be started/stopped similarly even if it is formed of a slide switch or a lever switch.

The mode selection lever 9 is a stick-shaped lever for example, and is placed on the side surface (videographer side) of the cassette cover 2. By operating the mode selection lever 9, a variety of functions of the camcorder 1 can be selected. The mode selection lever 9 is not limited to a stick-shaped lever. The selection can be made similarly even if the mode selection lever is formed of a push button such as a cursor button.

The mode dial 10 is formed of a dial switch rotatable in its circumference direction for example, and is placed on the side surface (videographer side) of the cassette cover 2 about the substantially same axis as the mode selection lever 9. By operating the mode dial 10, modes of the camcorder 1 can be switched. The switchable modes in this configuration include a shooting mode, a playback mode, a communication mode, and the like. The shooting mode is a mode in which a video or a still image can be taken. The playback mode is a mode in which a video signal or an audio signal recorded on a tape cassette or other information media can be reproduced. The communication mode is a mode in which a variety of data such as image data can be sent to/received from an electronic computing device such as a personal computer by connecting the camcorder thereto through a communication cable, a wireless communication channel, and the like.

The mode selection lever 9 and the mode dial 10 are not essential components. Further, the operation members to be placed on the cassette cover 2 are not limited to the lock lever 3, the zoom switch 4, the still image shooting button 5 and the power switch 6, and other operation members that can be operated conveniently by a user with his/her index finger or middle finger when the user grips the camcorder with his/her right hand may be present. For example, an operation member capable of starting and stopping a video shooting, or an operation member capable of selecting modes of the imaging device may be included.

The cassette holder 11 is formed in a substantially rectangular shape, and the cassette 24 can be held therein. The cassette holder 11 is placed so that it can move between a housing position and a protruding position with a driving force from a motor (not shown). Here, the housing position is where the cassette holder 11 is housed into the case 7, and the protruding position is where the cassette holder 11 protrudes. Therefore, the cassette holder 11 holds the cassette 24 at its protruding position and moves to the housing position while holding the cassette 24, thereby the cassette 24 can be mounted in the camcorder 1. A magnetic tape of the cassette 24 mounted in the camcorder 1 is pulled out by a loading mechanism within the camcorder 1, and wound around a rotating head drum provided with a magnetic head, thereby becoming recordable or reproducible. A surface of the cassette holder 11 on the grip side can be opened and closed with a lid. Thus, the lid is opened when mounting the cassette 24 to the cassette holder 11, and the lid is closed after the cassette 24 is mounted. The lid is configured to be locked, in a closed state, to the cassette holder 11.

The barrel 21 is formed in a substantially tube form, and contains optical lenses such as an object lens and a zoom lens, an imaging element for converting an external optical image into an electric signal, and the like.

The viewfinder 22 (display portion) is placed on a surface of the camcorder 1 opposite to the surface from which the object lens is exposed, and contains a liquid crystal display capable of displaying a video (a so-called through image) being captured by the imaging element and a video reproduced from an information medium such as a magnetic tape. A user can recognize the video visually by looking in the viewfinder 22.

A battery mounting portion 23 is placed on the same surface of the camcorder 1 on which the viewfinder 22 is placed, and a battery (not shown) for supplying power to the camcorder 1 can be mounted thereon or dismounted therefrom.

As shown in FIG. 3, a circuit board 31 (first board) is fixed within the case 7 in FIG. 1, and a connector 33 and a variety of electronic components are mounted thereon. The circuit board 31 is placed to be substantially parallel to the optical axis of a lens contained in the barrel 3 and be substantially vertical to the bottom surface of the camcorder 1.

A flexible board (second board) 32 is made of a flexible material, and it contains conductors. The zoom switch 4, the still image shooting button 5, the power switch 6, the S/S button 8, the mode selection lever 9, and the mode dial 10 are mounted on one end of the flexible board 32, and they are connected electrically to each other. The end of the flexible board 32 and the components mounted on the end of the flexible board 32 are fixed indirectly to the cassette cover 2, and they are displaced in connection to the opening/closing movement of the cassette cover 2. Portions of the flexible board 32 other than both ends are held by the inner surface of the cassette cover 2. If the flexible board 32 is fixed strongly to the inner surface of the cassette cover 2 at this time, load may arise when the cassette cover 2 is turned. Thus, it is assumed that the flexible board 32 is held in a degree not to cause any substantial load.

A connector 33 is mounted on the circuit board 31, and it can be connected electrically to the flexible board 32. By connecting the other end of the flexible board 32 to the connector 33, the flexible board 32 and the circuit board 31 can be connected electrically to each other.

As described above, in the present embodiment, the zoom switch 4, the mode dial 10, and the Like are connected electrically to the circuit board 31 with a single flexible board 32 and connector 33.

The zoom switch 4, the still image shooting button 5, and the power switch 6 are placed on the top surface of the cassette cover 2. That is, they are placed at positions to allow a user to operate the components conveniently with his/her index finger or middle finger when the user grips the camcorder 1 with his/her hand. The S/S button 8, the mode selection lever 9, and the mode dial 10 are placed on a side surface of the cassette cover 2 on the object side. That is, they are placed at positions that allow a user to operate the components with his/her thumb when the user grips the camcorder 1 with his/her hand.

The zoom switch 4, and the still image shooting button 5 are defined as first operation members. Further, the power button 6, the S/S button 8, the mode selection lever 9, and the mode dial 10 are defined as second operation members.

Hereinafter, an operation will be described.

By sliding the lock lever 3 in the arrow H direction in a state where the cassette cover 2 is closed with respect to the case 7 as shown in FIG. 1, the cassette cover 2 is unlocked, and thus the cassette cover 2 can be opened/closed in the arrow A direction.

By turning the cassette cover 2 in the arrow A direction to open it as shown in FIG. 2, an internal open/close detection switch (not shown) detects that the cassette cover 2 is opened. When the open/close detection switch detects that the cassette cover 2 is opened, a motor (not shown) is actuated to elevate the cassette holder 11 in an arrow E direction. When the cassette holder 11 is elevated to a predetermined position, a lid covering the cassette 24 is unlocked and opened. As indicated respectively by arrows F and G, the tape cassette 24 can be inserted into or taken out from the cassette holder 11 whose lid is opened.

If the cassette cover 2 is turned by a predetermined angle in the arrow B direction in a state where the cassette cover 2 is opened as shown in FIG. 2, the open/close detection switch detects that the cassette cover 2 is closed. When the open/close detection switch detects that the cassette cover 2 is closed, the motor is actuated to house the cassette holder 11 into the camcorder 1.

Subsequently, if the cassette cover 2 is turned further in the arrow B direction so as to be locked completely as shown in FIG. 1, the lock hook fits into the lock hole (either of them are not shown), thereby holding the cassette cover 2 in a closed state.

Next, movements of the respective components at the time of opening/closing the cassette cover 2 will be described.

In the present embodiment, the zoom switch 4, the still image shooting button 5, the power switch 6, the S/S button 8, the mode selection lever 9, and the mode dial 10 are placed on the cassette cover 2. Thus, when the cassette cover 2 is turned between the position shown in FIG. 1 and the position shown in FIG. 2., the components also are displaced accordingly. Specifically, as shown in FIG. 3, when the cassette cover 2 is at the position shown in FIG. 1, the zoom switch 4, the still image shooting button 5, the power switch 6, the S/S button 8, the mode selection lever 9, and the mode dial 10 are at the position illustrated in a full line. When the cassette cover 2 is turned from the above state to the position shown in FIG. 2, the respective components are moved respectively to positions denoted by reference numerals 4a, 5a, 6a, 8a, 9a, and 10a.

As shown in FIG. 3, the respective components are connected to the circuit board 31 through the flexible board 32. That is, one end of the flexible board 32 is connected electrically to the respective components, and the other end is connected to the connector 33 mounted on the circuit board 31.

Therefore, even if the respective components are displaced from the positions denoted by reference numerals 4, 5, 6, 8, 9 and 10 to the positions denoted by reference numerals 4a, 5a, 6a, 8a, 9a, and 10a in FIG. 3, the flexible board 32 follows the components by deforming itself, and thereby an electric connection between the respective components and the circuit board 3 are maintained.

### [2. Placement of operating members]

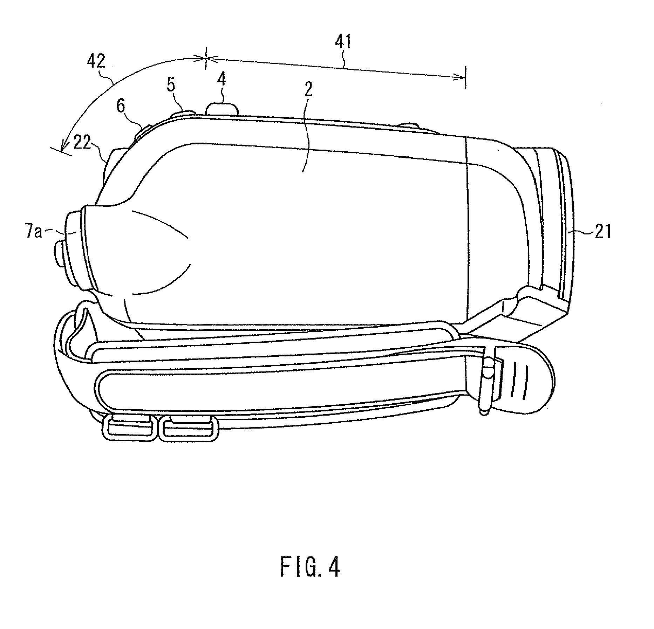

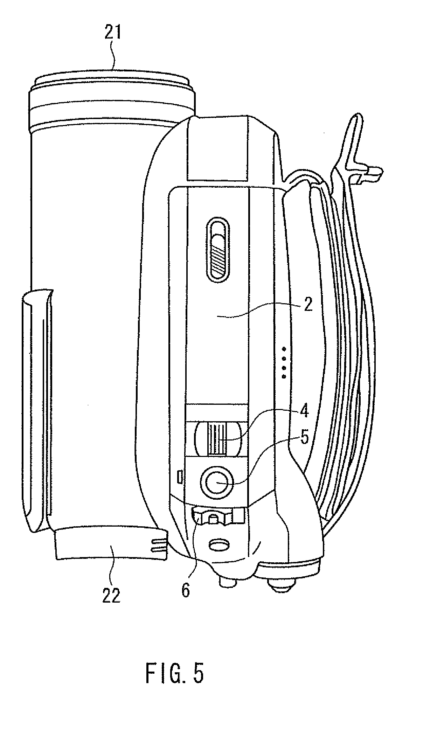

FIG. 4 is a side view showing the camcorder 1 from the grip side. FIG. 5 is a plan view showing the camcorder 1 from the top.

As shown in FIG. 4, the top surface (a surface on which a user can position at least his/her index finger and middle finger when gripping the camcorder 1 with his/her right hand) of the cassette cover 2 includes at least a flat portion 41 and a curved portion 42. The flat portion 41 and the curved portion 42 are formed continuously, and the curved portion 42 further is connected to a side surface 7a.

The flat portion 41 is formed from the end of the top surface of the cassette cover 2 on the barrel 21 side to the vicinity of a surface for projection to the cassette cover 2 at the end of the cassette holder 11 on the viewfinder 22 side. The flat portion 41 may be formed so that its surface is parallel to its optical axis or be formed to be slightly tilted with respect to the optical axis so that the barrel 21 side of the flat portion 41 is lower than the view finder 22 side as shown in FIG. 4. By tilting the flat portion 41 as shown in FIG. 4, a user can position his/her index finger, middle finger, ring finger, and little finger thereon in a natural posture when the user grips the camcorder 1 with his/her right hand, so that undue burden will not be placed on the fingers and the hand when the user grips the camcorder 1, and thus tiredness during shooting can be reduced. The lock lever 3 and the zoom switch 4 are placed on the flat portion 41.

The curved portion 42 is formed continuously from the end of the flat portion 41 on the viewfinder 22 side to the vicinity of the S/S button. The still image shooting button 5 and the power switch 6 are placed on the curved portion 42. The shape of the curved portion 42 is not limited only to a curved shape, and it may include a polygonal shape formed by connecting a plurality of planes. When the portion is formed polygonally, the same effects to when it is formed in a curved shape can be obtained by placing operation members on each of the planes.

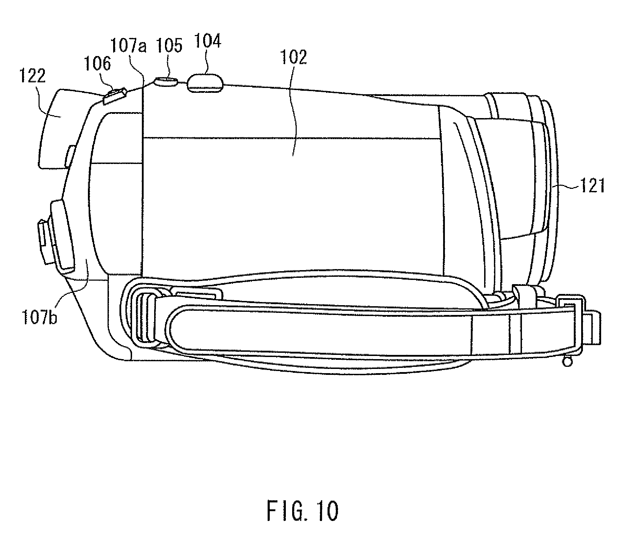

The present embodiment is characterized in that the case 107a (see FIG. 10) on the viewfinder side in the conventional configuration is eliminated, and the case that covers the viewfinder side is integrated into the cassette cover 2 as shown in FIGS. 4 and 5.

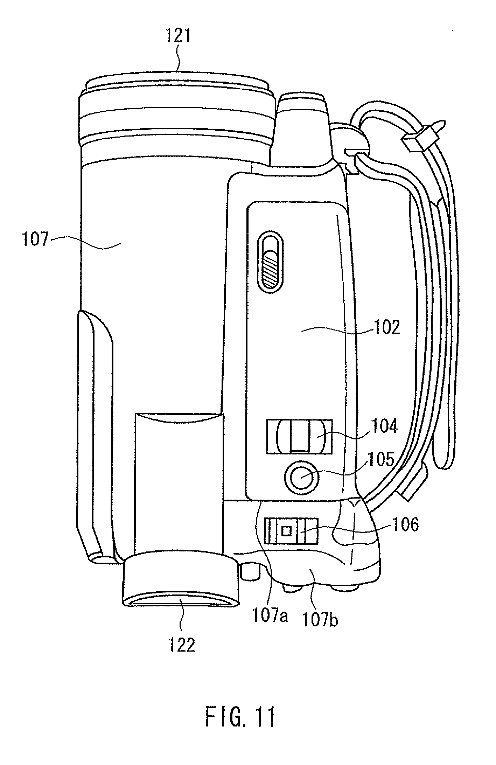

In the conventional configuration, a boundary wall 107a is provided for the main body switch placement portion 107b at a boundary between the cassette cover 2 and the main body switch placement portion 107b in a state where the cassette cover 2 is closed with respect to the case 107 as shown in FIG. 7. The board for mounting the power switch 106, the S/S button 108, the mode selection lever 109, the mode selection dial 110 and the like and the flexible board 134 connected to the board are placed in a space formed by the boundary wall 107a and the main body switch placement portion 107b. Thus, the cassette cover 102 and the main body switch placing portion 107b had to be placed separately to avoid the boundary wall 107a. With such a configuration, the flexibility in placing the operation members decreases. Furthermore, when miniaturizing the camcorder 1, it is necessary to narrow spacings between the operation members or to miniaturize the operation members themselves due to the existence of the boundary wall 107a. In order to prevent an operating error (pressing two button at the same time, etc.), it is necessary to ensure that the operating members and their placement spacings have a certain degree of sizes. Thus, if the sizes of the operation members are reduced excessively, or their placement spacings are narrowed, operating errors are more likely to occur. For example, in FIGS. 10 and 11, though the spacing between the zoom switch 104 and the still image shooting button 105 can be broadened because of the boundary wall 107a, the spacing between the still image shooting button 105 and the power switch 106 becomes extremely narrowed.

On the other hand, in this present embodiment, since the flat portion 41 and the curved portion 42 are formed on the cassette cover 2 as shown in FIGS. 4 and 5, and the cassette cover 2 is extended to the side surface 7a, the boundary wall 107a as in the conventional configuration can be eliminated. By eliminating the boundary wall 107a, the flexibility in placing the operation members can be increased. That is, since it is not necessary to design the placement of the operation members by taking the boundary wall 107a into consideration, the operation members can be placed at desired positions as long as they are on the flat portion 41 and the curved portion 42. Therefore, when miniaturizing the camcorder 1, it is only necessary to reduce slightly the sizes of the operation members, or to narrow slightly the spacings between the operation members, and thus it is possible to reduce significantly the possibility of operation errors occurring as compared to the conventional configuration. For example, when assuming that the sizes of the respective operation members in FIGS. 4 and 5 and those in FIGS. 10 and 11 are the same, the zoom switch 4, the still image shooting button 5 and the power switch 6 can be placed with larger spacing in comparison to the configurations shown in FIGS. 10 and 11.

Furthermore, since it is necessary to provide the boundary wall 107a in the configurations shown in FIGS. 10 and 11, when a certain degree of placement spacings between the operation members are ensured, the operation members are placed over a broad range. With such a configuration, the movement range of a user's right index finger or middle finger is broadened when the user grips the camcorder 1 with his/her right hand, thereby reducing the usability.

On the other hand, in the present embodiment, since it is not necessary to provide the boundary wall 107a, a placement range of the operation members can be reduced even if a certain degree of the placement spacings between the operation members is ensured. Therefore, the movement range of a user's right index finger or middle finger can be reduced when the user grips the camcorder with his/her right hand, and thus the usability can be improved. In particular, when the movement ranges of fingers are small, an intended operation member can be located quickly only with the touch of a fingertip, without recognizing visually the operation members.

In the present embodiment, the zoom switch 4, the still image shooting button 5 and the power switch 6 are placed to be aligned in the stated order as shown in FIGS. 4 and 5. By placing the operation members in this way, it is possible to reduce the risk of operation errors occurring when the placement spacings between the operation members are narrowed, and the usability can be improved. That is, the zoom switch 4 can be slid in the directions indicated by the arrows C and D in FIG. 1. The still image shooting button 5 can be pressed in a substantially vertical direction. Similarly to the zoom switch 4, the power switch 6 can be slid in the directions indicated by the arrows C and D. That is, the operation members are placed so that adjacent operation members have different operation directions. With such a configuration, the possibility of operation errors occurring can be reduced in comparison to a configuration in which operation members having the same operation direction are placed adjacently (for example, a configuration in which the zoom switch and the power switch 6 are provided adjacent to each other). Further, since adjacent operation members have different operation directions, an intended operation member can be located quickly only with the touch of a fingertip, without recognizing visually the operation member.

In the present embodiment, though the operation member that can be pressed is placed between the slidable operation members, any other combinations may be used as long as at least adjacent operation members have different operation directions. For example, there may be a configuration in which a slidable operation member is placed between two operation members that can be pressed.

### [3. Effects of the embodiment, etc.]

As described above, according to the present embodiment, since the cassette cover 2 is extended not only to the grip surface of the camcorder 1 but also to the surface of the camcorder 1 on the viewfinder side, the operation members to be mounted on the side surface on the viewfinder side can be mounted on the cassette cover 2. Thus, the zoom switch 4, the S/S button 8 and the like can be connected to the circuit board 31 with a single flexible board 32 and connector 33, and thereby the wirings can be simplified.

Furthermore, similarly to the conventional configuration, a variety of switches are placed at the positions that allow a user to operate the switches conveniently with one of his/her hands when the user grips the camcorder 1 with the same hand. Thus, the usability can be maintained.

By extending the cassette cover 2 to the side surface of the camcorder 1 on the finder side, the flexibility in placing the operation members can be improved. Furthermore, since the flexibility in placing the operation members can be improved, the camcorder can be miniaturized without compromising the usability of the operation members. Further, since the placement spacings between the operation members can be narrowed, the movement ranges of a user's fingers can be reduced when the user grips the camcorder with his/her hand, and thereby the usability can be improved.

Furthermore, by placing adjacently the operation members to be operated in different operation directions, the risk of operation errors occurring can be reduced when placement spacings between the operation members are narrowed. Further, the usability can be improved.

Since the connector 33 is placed in the vicinity of a turning fulcrum for the cassette cover 2, and the flexible board 32 is placed along the inner surface of the cassette cover 2, an undue load is not applied on the flexible board 32 when the cassette cover 2 is turned. Therefore, it is possible to prevent disconnection between the flexible board 32 and the connector 88, and a break within the flexible board 32.

The switches mounted on the cassette cover 2 in the present embodiment are the zoom switch 4, the still image shooting button 5, the power switch 6, the S/S button 8, the mode selection lever 9, and the mode dial 10. However, the switches are not limited to the above examples, and there may be provided switches required to be operated readily by a user with his/her index finger or thumb when the user grips the camcorder 1 with his/her hand, and switches that are used frequently

Though the respective switches and the circuit board 31 are connected through the flexible board 32, they may be connected to each other with connecting wires other than the flexible board 32 if the connecting wires are connecting members having at least flexibility and elasticity. For example, a wiring made of insulated nichrome wires can be used for the connection.

In the present embodiment, though the flexible board 32 is extended from the zoom switch 4 side and is connected to the connector 33 as shown in FIG. 3, the flexible board may be extended from the S/S button 8 side and be connected to the connector. In this configuration, since at least the zoom switch 4 is placed on the top surface of the cassette cover 2, the flexible board 32 can be placed along the inner surface of the cassette cover 2, and thereby no undue load is applied on the flexible board 32 when the cassette cover 2 is turned.

Though the present embodiment is described by taking a cassette case a magnetic tape as an information medium as an example, the information medium is not limited to magnetic tapes, and a semiconductor memory card, a recordable optical disc, a hard drive, and the like can be also applied, for example.

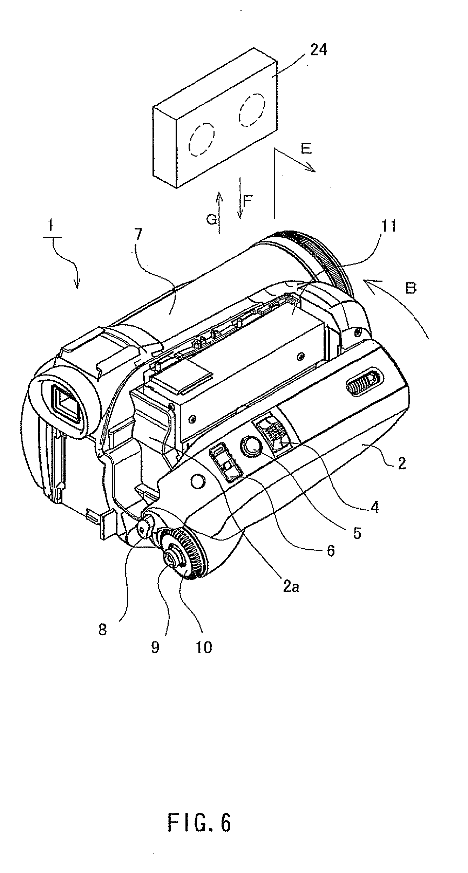

A wall portion 2a can be placed on the side surface of the cassette holder 2 as shown in FIG. 6. By placing the wall portion 2 a so as to cover the side surface of the cassette holder 2, it is possible to prevent foreign matter such as dust from entering into the cassette holder 2.

### Industrial Applicability

The present invention provides an effective imaging device using a tape medium or a disc medium as an information medium.

## Claims

1. An imaging device comprising a first case and a second case that can be opened/closed with respect to the first case,
wherein the first case comprises:
an imaging portion comprising an imaging element;
a lens portion comprising a plurality of lenses for forming an optical image on the imaging element;
a signal converting portion for converting an optical image signal formed on the imaging element into an electric signal; and
a lens driving portion for driving the plurality of lenses to change a focal length of the lens portion, and
the second case comprises:
a focal length operation portion for driving the lens driving portion;
an imaging start/stop operation portion for starting/stopping recording of the electric signal; and
a power supply operation portion for supplying and stopping supply power to the imaging element and the lens driving portion.

2. The imaging device according to claim 1, wherein the first case comprises a signal processor for converting an electrical signal converted by the signal converting portion into a video signal and a display portion for displaying a video on the basis of the video signal.

3. The imaging device according claim 1 or 2, wherein the imaging portion, the signal converting portion and the lens driving portion are placed in the first case, the first case comprises a first board having wires for providing a control signal thereto, and the second case comprises a second board to which the focal length operation portion, the imaging start/stop operation portion and the power supply operation portion are connected independently.

4. The imaging device according to any of claims 1 to 3, the imaging device comprising a single wiring board that connects the second board and the first board.

5. The imaging device according to any of claims 1 to 4, the imaging device comprising a housing portion at an interface portion at which the first case and the second case are opened/closed, the housing portion has a capacity for housing an information medium onto which an electric signal converted by the signal converting portion can be recorded.

6. The imaging device according to claim 1, wherein the second case comprises: a top surface that is substantially parallel to an optical axis of the lens portion and that covers the top of the device, and a side surface that is substantially parallel to a surface that is orthogonal to the optical axis and is placed to be substantially orthogonal to the top surfaced the top surface and the side surface are connected through a curved portion formed in a curved shape, and at least one of the focal length operation portion, the imaging start/stop operation portion and the power supply operation portion is placed on the curved portion.

7. The imaging device according to claim 1, wherein the focal length operation portion, the imaging start/stop operation portion and the power supply operation portion are aligned on the second case, and adjacent operation portions are operated in directions different from each other.
